# EUROPÄISCHE PATENTANMELDUNG

(11) **EP 4 794 274 A1**
(43) Veröffentlichungstag der Anmeldung: **19.08.2026**
(21) Anmeldenummer: 26152819.4
(22) Anmeldetag: 20.01.2026
(51) Int. Cl.: H04L 12/28

(54) **HAUSHALTGERÄT, VERFAHREN ZUM VERBINDEN EINES HAUSHALTGERÄTS MIT EINEM WEITEREN HAUSHALTGERÄT UND GERÄTESYSTEM**

(30) Priorität: 18.02.2025 BE 202500017
(71) Anmelder: Miele & Cie. KG, 33332 Gütersloh (DE)
(72) Erfinder: Westergerling, Mario, 33334 Gütersloh (DE); Schmelter, Stefan, 33330 Gütersloh (DE); Franzmeier, Jens, 32052 Herford (DE); Koch, Daniel, 32120 Hiddenhausen (DE)

(57) **Zusammenfassung**

Die Erfindung betrifft ein Haushaltgerät (100) mit einer Verbindungseinrichtung (105). Die Verbindungseinrichtung (105) ist ausgebildet, um einen UWB-basierten Funkkanal (110) mit einem noch nicht mit dem Haushaltgerät (100) vernetzten weiteren Haushaltgerät (115) aufzubauen, und das Haushaltgerät (100) unter Verwendung des Funkkanals (110) mit dem weiteren Haushaltgerät (115) ohne zwischengeschalteten Router (120) zu vernetzen.

## Beschreibung

Die Erfindung betrifft ein Haushaltgerät, ein Verfahren zum Verbinden eines Haushaltgeräts mit einem weiteren Haushaltgerät und ein Gerätesystem.

Die EP 2013825 A1 beschreibt ein System zur Fernsteuerung und Überwachung eines Kühlschranks für Nahrungsmittel und seines Inhalts.

Der hier vorgestellte Ansatz stellt sich die Aufgabe, ein verbessertes Haushaltgerät, ein verbessertes Verfahren zum Verbinden eines Haushaltgeräts mit einem weiteren Haushaltgerät und ein verbessertes Gerätesystem zu schaffen.

Erfindungsgemäß wird diese Aufgabe durch ein Haushaltgerät, ein Verfahren zum Verbinden eines Haushaltgeräts mit einem weiteren Haushaltgerät und ein Gerätesystem mit den Merkmalen bzw. Schritten der Hauptansprüche gelöst. Vorteilhafte Ausgestaltungen und Weiterbildungen der Erfindung ergeben sich aus den nachfolgenden Unteransprüchen.

Die mit der Erfindung erreichbaren Vorteile bestehen darin, dass Haushaltgeräte auch ohne Verbindung zu einem Router schnell und einfach vernetzt und beispielsweise in ein bestehendes Gerätenetzwerk integriert werden können.

Ein Haushaltgerät weist eine Verbindungseinrichtung auf, die ausgebildet ist, um einen UWB-basierten Funkkanal mit einem noch nicht mit dem Haushaltgerät vernetzten weiteren Haushaltgerät aufzubauen, und das Haushaltgerät unter Verwendung des Funkkanals mit dem weiteren Haushaltgerät ohne zwischengeschalteten Router zu vernetzen.

Bei dem Haushaltgerät kann es sich um ein beliebiges Haushaltgerät, wie beispielsweise eine Waschmaschine, Spülmaschine, ein Wäschetrocknergerät, Kühlgerät, Gefriergerät, einen Herd oder eine Dunstabzugshaube handeln. Ebenso kann es sich bei dem weiteren Haushaltgerät um ein beliebiges Haushaltgerät, wie beispielsweise eine Waschmaschine, Spülmaschine, ein Wäschetrocknergerät, Kühlgerät, Gefriergerät, einen Herd oder eine Dunstabzugshaube handeln. UWB steht für Ultra-Breitband, wobei der UWB-basierte Funkkanal unter Verwendung der Ultra-Breitband-Technologie aufgebaut werden kann. Die Verbindungseinrichtung kann hierzu einen UWB-Transponder in Form beispielsweise einer UWB-basierten Mikroelektronik aufweisen. Ein solcher UWB-Transponder ist als Fertigprodukt kostengünstig erhältlich und einfach in oder an dem Haushaltgerät integrierbar. Entsprechend kann das weitere Haushaltgerät eine weitere Verbindungseinrichtung mit einem weiteren UWB-Transponder in Form beispielsweise einer weiteren UWB-basierten Mikroelektronik aufweisen. Beispielsweise kann die Verbindungseinrichtung ausgebildet sein, um unter Verwendung eines UWB-basierten Funksignals den Funkkanal aufzubauen und das Vernetzen mit dem weiteren Haushaltgerät durchzuführen. Die Ultra-Breitband-Technologie ermöglicht eine Nutzung extrem großer Frequenzbereiche mit einer Bandbreite von beispielsweise 30 MHz bis zu 10,6 GHz, beispielsweise mindestens 500 MHz. Vorteilhafterweise ist dank UWB eine äußerst hohe Präzision bezüglich eines Orts und einer Entfernung eines angefunkten Objekts, beispielsweise des weiteren Haushaltgeräts, möglich. Anders als mittels beispielsweise GPS oder Bluetooth kann über UWB bis auf ein paar Zentimeter genau bestimmt werden, wo sich das weitere Haushaltgerät befindet. UWB greift hierbei beispielsweise auf stets gleich starke Signalimpulse, die lediglich im zeitlichen Abstand variieren. Da die Zeit zwischen dem Versenden des Funksignals und dem Empfangen einer hierdurch erzeugten UWB-Welle messbar ist, ist es ganz einfach, eine Entfernung zwischen einem Sender des Funksignals und einem Empfänger rechnerisch zu bestimmen. Mittels UWB ist es vorteilhafterweise möglich, ohne den zwischengeschalteten Router eine Funkverbindung zwischen zwei Haushaltgeräten herzustellen, um diese für beispielsweise eine Datenübertragung oder einen Informationsaustausch miteinander zu verbinden. Ein aufwendiger Pairing-Prozess kann somit vereinfacht werden oder sogar ganz entfallen. Ferner ist vorteilhafterweise das Vernetzen von Haushaltgeräten ermöglicht, welche sich beispielsweise außerhalb einer Router-Reichweite befinden.

Gemäß einer Ausführungsform ist die Verbindungseinrichtung ausgebildet, um ein UWB-basiertes Funksignal an das weitere Haushaltgerät zu senden, um den Funkkanal aufzubauen. Die weitere Verbindungseinrichtung des weiteren Haushaltgeräts kann ausgebildet sein, um das Funksignal zu empfangen und beispielsweise ansprechend auf einen Empfang des Funksignals ein UWB-basiertes Empfangssignal an das Haushaltgerät zu senden. Die Verbindungseinrichtung kann ferner ausgebildet sein, um das UWB-basierte Empfangssignal von dem weiteren Haushaltgerät zu empfangen, um den Funkkanal aufzubauen. So kann der Funkkanal über das Senden und zusätzlich oder alternativ Empfangen von Funksignalen aufgebaut werden. Somit kann der Aufbau beispielsweise sowohl von dem Haushaltgerät als auch von dem weiteren Haushaltgerät angestoßen werden. Die Verbindungseinrichtung kann zum Senden des Funksignals eine Sendeeinrichtung und zusätzlich oder alternativ zum Empfangen des Empfangssignals eine Empfangseinrichtung aufweisen, und optional auch eine Vernetzungseinrichtung aufweisen, die ausgebildet ist, um ansprechend auf einen Empfang des Empfangssignals das Vernetzen durchzuführen.

Es ist weiterhin von Vorteil, wenn die Verbindungseinrichtung gemäß einer Ausführungsform ausgebildet ist, um einen Routerkanal zu dem Router aufzubauen, um eine Verbindung zwischen dem Haushaltgerät und einer Cloud herzustellen. Über den Routerkanal kann vorteilhafterweise eine Datenübertragung oder ein Informationsaustausch mit der Cloud erfolgen.

Gemäß einer Ausführungsform kann die Verbindungseinrichtung ausgebildet sein, um den Funkkanal mit dem Routerkanal zu koppeln, um eine Verbindung zwischen dem weiteren Haushaltgerät und der Cloud über das Haushaltgerät und den Router herzustellen. So kann auch für das weitere Haushaltgerät ein Routerkanal aufgebaut werden, ohne dass das weitere Haushaltgerät selbst eine direkte Verbindung zu dem Router hat. Das Haushaltgerät kann hierbei beispielsweise als Repeater fungieren, um auch dem weiteren Haushaltgerät eine Verbindung zur Cloud zu ermöglichen.

Es ist weiterhin von Vorteil, wenn die Verbindungseinrichtung gemäß einer Ausführungsform ausgebildet ist, um den Funkkanal ansprechend auf einen ersten Funkkontakt zwischen dem Haushaltgerät und dem weiteren Haushaltgerät automatisiert aufzubauen. So kann das Vernetzen der Haushaltgeräte schnell und einfach automatisiert erfolgen, wobei ein Nutzer keinen zusätzlichen Aufwand hat.

Das Haushaltgerät kann ferner eine Bestimmeinrichtung aufweisen, die ausgebildet ist, um unter Verwendung des Funkkanals eine relative Position des Haushaltgeräts zu dem weiteren Haushaltgerät zu ermitteln. Als relative Position ist eine Position des weiteren Haushaltgeräts innerhalb eines eigenen Koordinatensystems des Haushaltgeräts zu verstehen. Ein Vernetzen zwischen Haushaltgeräten kann so beispielsweise zwischen besonders nah beieinander positionierten Haushaltgeräten priorisiert werden. Auch kann beispielsweise ein automatisiertes Vernetzen weit entfernter Haushaltgeräte, von denen angenommen werden kann, dass sie unterschiedlichen Haushalten zugeordnet sind, vermieden werden.

Die Verbindungseinrichtung kann ausgebildet sein, um einen UWB-basierten weiteren Funkkanal mit einem noch nicht mit dem Haushaltgerät vernetzten zusätzlichen Haushaltgerät aufzubauen und das Haushaltgerät unter Verwendung des weiteren Funkkanals mit dem zusätzlichen Haushaltgerät ohne zwischengeschalteten Router zu vernetzen. Auf diese Weise können nach und nach weitere Haushaltgeräte automatisiert in ein bestehendes Netzwerk eingebunden werden.

Auf entsprechende Weise kann beispielsweise ein drittes Haushaltgerät mit einem der sich bereits im Netzwerk befindlichen Haushaltgeräte verbunden werden.

Ein Verfahren zum Verbinden eines Haushaltgeräts in einer der vorangehend beschriebenen Varianten mit einem weiteren Haushaltgerät weist einen Schritt des Aufbauens und einen Schritt des Vernetzens auf. Im Schritt des Aufbauens wird ein UWB-basierter Funkkanal mit dem noch nicht mit dem Haushaltgerät vernetzten weiteren Haushaltgerät aufgebaut. Im Schritt des Vernetzens wird das Haushaltgerät mit dem weiteren Haushaltgerät unter Verwendung des Funkkanals ohne zwischengeschalteten Router vernetzt, um das Haushaltgeräts mit dem weiteren Haushaltgerät zu verbinden. Ein solches Verfahren ermöglicht das Verbinden unterschiedlicher Haushaltgeräte innerhalb beispielsweise eines Haushalts, ohne dass für jedes Haushaltgerät zwingend eine direkte Verbindung zu einem Router besteht.

Ein Gerätesystem weist ein Haushaltgerät in einer der vorangehend beschriebenen Varianten, das weitere Haushaltgerät und den Router auf, wobei das Haushaltgerät mit dem weiteren Haushaltgerät über den Funkkanal ohne zwischengeschalteten Router vernetzt ist. Ein solches Gerätesystem kann eine Verbindung zwischen Haushaltgeräten ermöglichen, ohne zwischengeschalteten Router.

Das Haushaltgerät und der Router können über einen Routerkanal miteinander verbunden sein. So kann zumindest das Haushaltgerät eine Verbindung zu dem Router und somit zu der Cloud aufweisen.

Gemäß einer Ausführungsform umfasst das Gerätesystem ferner ein zusätzliches Haushaltgerät, das über einen weiteren Funkkanal mit zumindest dem Haushaltgerät und zusätzlich oder alternativ weiteren Haushaltgerät ohne zwischengeschalteten Router vernetzt ist. So können mehrere Haushaltgeräte ohne zwischengeschalteten Router mit dem Haushaltgerät verbunden sein, welches eine Verbindung zu dem Router haben kann.

Der hier vorgestellte Ansatz schafft ferner eine Steuereinheit, die ausgebildet ist, um die Schritte einer Variante eines hier vorgestellten Verfahrens in entsprechenden Einrichtungen durchzuführen, anzusteuern bzw. umzusetzen. Auch durch diese Ausführungsvariante der Erfindung in Form einer Vorrichtung kann die der Erfindung zugrunde liegende Aufgabe schnell und effizient gelöst werden.

Die Steuereinheit kann ausgebildet sein, um Eingangssignale einzulesen und unter Verwendung der Eingangssignale Ausgangssignale zu bestimmen und bereitzustellen. Ein Eingangssignal kann beispielsweise ein über eine Eingangsschnittstelle der Steuereinheit einlesbares Sensorsignal darstellen. Ein Ausgangssignal kann ein Steuersignal oder ein Datensignal darstellen, das an einer Ausgangsschnittstelle der Steuereinheit bereitgestellt werden kann. Die Steuereinheit kann ausgebildet sein, um die Ausgangssignale unter Verwendung einer in Hardware oder Software umgesetzten Verarbeitungsvorschrift zu bestimmen. Beispielsweise kann die Steuereinheit dazu eine Logikschaltung, einen integrierten Schaltkreis oder ein Softwaremodul umfassen und beispielsweise als ein diskretes Bauelement realisiert sein oder von einem diskreten Bauelement umfasst sein. Von Vorteil ist auch ein Computer-Programmprodukt oder Computerprogramm mit Programmcode, der auf einem maschinenlesbaren Träger oder Speichermedium wie einem Halbleiterspeicher, einem Festplattenspeicher oder einem optischen Speicher gespeichert sein kann. Wird das Programmprodukt oder Programm auf einem Computer oder einer Steuereinheit ausgeführt, so kann das Programmprodukt oder Programm zur Durchführung, Umsetzung und/oder Ansteuerung der Schritte des Verfahrens nach einer der hier beschriebenen Ausführungsformen verwendet werden.

Auch wenn der beschriebene Ansatz anhand eines Haushaltgeräts beschrieben wird, kann der hier beschriebene Ansatz entsprechend im Zusammenhang mit einem gewerblichen oder professionellen Gerät, beispielsweise einem medizinischen Gerät, wie einem Reinigungs- oder Desinfektionsgerät, einem Kleinsterilisator, einem Großraumdesinfektor oder einer Container-Waschanlage eingesetzt werden.

Ein Ausführungsbeispiel der Erfindung ist in den Zeichnungen rein schematisch dargestellt und wird nachfolgend näher beschrieben. Es zeigt
- Figur 1: eine schematische Darstellung eines Haushaltgeräts in einem Gerätesystem gemäß einem Ausführungsbeispiel;
- Figur 2: eine schematische Darstellung von Haushaltgeräten gemäß einem Ausführungsbeispiel innerhalb eines Haushalts;
- Figur 3: eine schematische Darstellung von Haushaltgeräten gemäß einem Ausführungsbeispiel innerhalb eines Haushalts; und
- Figur 4: ein Ablaufdiagramm eines Verfahrens gemäß einem Ausführungsbeispiel zum Verbinden eines Haushaltgeräts mit einem weiteren Haushaltgerät.

In der nachfolgenden Beschreibung günstiger Ausführungsbeispiele des vorliegenden Ansatzes werden für die in den verschiedenen Figuren dargestellten und ähnlich wirkenden Elemente gleiche oder ähnliche Bezugszeichen verwendet, wobei auf eine wiederholte Beschreibung dieser Elemente verzichtet wird.

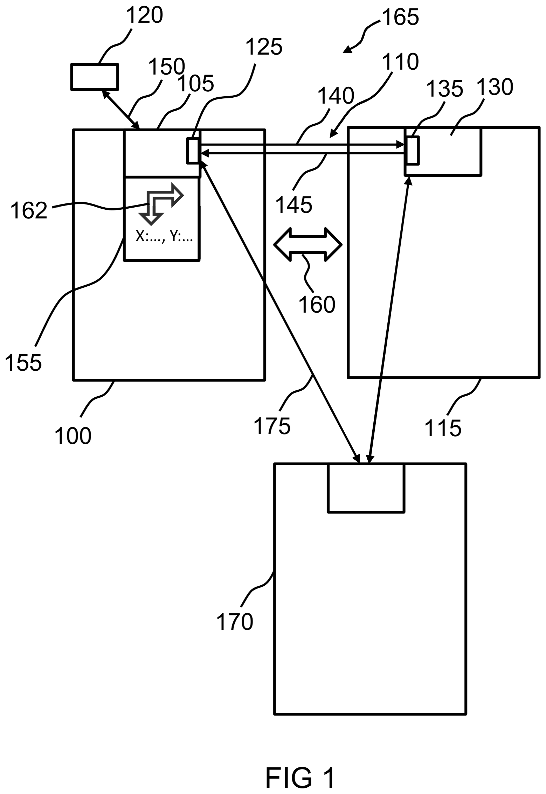

Figur 1 zeigt eine schematische Darstellung eines Haushaltgeräts 100 gemäß einem Ausführungsbeispiel.

Das Haushaltgerät 100 weist eine Verbindungseinrichtung 105 auf, die ausgebildet ist, um einen UWB-basierten Funkkanal 110 mit einem noch nicht mit dem Haushaltgerät 100 vernetzten weiteren Haushaltgerät 115 aufzubauen. Unter Verwendung des Funkkanals 110 lässt sich das Haushaltgerät 100 mit dem weiteren Haushaltgerät 115 ohne zwischengeschalteten Router 120 zu vernetzen. Somit kann der Funkkanal **110** eine Direktverbindung zwischen den Haushaltgeräten 100, 115 darstellen.

Bei dem Haushaltgerät 100 handelt es sich um ein beliebiges Haushaltgerät, wie beispielsweise eine Waschmaschine, Spülmaschine, ein Wäschetrocknergerät, Kühlgerät, Gefriergerät, einen Herd oder eine Dunstabzugshaube. Ebenso handelt es sich bei dem weiteren Haushaltgerät 115 um ein beliebiges der vorangehend aufgezählten Haushaltgeräte. UWB steht für Ultra-Breitband, wobei der UWB-basierte Funkkanal **110** unter Verwendung der Ultra-Breitband-Technologie aufgebaut wird oder wurde. Die Verbindungseinrichtung 105 weist hierzu gemäß diesem Ausführungsbeispiel einen UWB-Transponder 125 in Form beispielsweise einer UWB-basierten Mikroelektronik auf. Entsprechend weist das weitere Haushaltgerät 115 gemäß diesem Ausführungsbeispiel eine weitere Verbindungseinrichtung 130 mit einem weiteren UWB-Transponder 135 in Form beispielsweise einer weiteren UWB-basierten Mikroelektronik auf.

Gemäß diesem Ausführungsbeispiel ist die Verbindungseinrichtung 105 ausgebildet, um unter Verwendung eines UWB-basierten Funksignals 140 den Funkkanal **110** aufzubauen und das Vernetzen mit dem weiteren Haushaltgerät 115 durchzuführen. Beispielsweise wird der Verbindungsaufbau automatisiert ausgeführt, wenn das weitere Haushaltgerät 115 erstmalig in dem Haushalt, in dem auch das Haushaltgerät 100 angeordnet ist, in Betrieb genommen wird.

Die Ultra-Breitband-Technologie ermöglicht eine Nutzung extrem großer Frequenzbereiche mit einer Bandbreite von beispielsweise 30 MHz bis zu 10,6 GHz, beispielsweise mindestens 500 MHz. Vorteilhafterweise ist dank UWB eine äußerst hohe Präzision bezüglich eines Orts und einer Entfernung eines angefunkten Objekts, beispielsweise des weiteren Haushaltgeräts 115, möglich. Anders als mittels beispielsweise GPS oder Bluetooth kann über UWB bis auf ein paar Zentimeter genau bestimmt werden, wo sich das weitere Haushaltgerät 115 befindet. UWB greift hierbei beispielsweise auf stets gleich starke Signalimpulse, die lediglich im zeitlichen Abstand variieren. Da die Zeit zwischen dem Versenden des Funksignals 140 und dem Empfangen einer hierdurch erzeugten UWB-Welle messbar ist, ist es ganz einfach, eine Entfernung zwischen einem Sender des Funksignals 140 und einem Empfänger rechnerisch zu bestimmen.

Gemäß diesem Ausführungsbeispiel ist die Verbindungseinrichtung 105 ausgebildet, um das UWB-basierte Funksignal 140 an das weitere Haushaltgerät 115 zu senden, um den Funkkanal 110 aufzubauen. Die weitere Verbindungseinrichtung 130 des weiteren Haushaltgeräts 115 ist gemäß diesem Ausführungsbeispiel ausgebildet, um das Funksignal 140 zu empfangen und ansprechend auf einen Empfang des Funksignals 140 ein UWB-basiertes Empfangssignal 145 an das Haushaltgerät 100 zu senden. Somit kann der Aufbau des Funkkanals 110 ausgehend von dem Haushaltgerät 100 angestoßen werden.

Zusätzlich oder alternativ ist die Verbindungseinrichtung 105 gemäß einem Ausführungsbeispiel ausgebildet, um das UWB-basierte Empfangssignal 145 von dem weiteren Haushaltgerät 115 zu empfangen, um den Funkkanal 110 aufzubauen. Somit kann der Aufbau des Funkkanals 110 ausgehend von dem weiteren Haushaltgerät 115 angestoßen werden.

Die Verbindungseinrichtung 105 oder der UWB-Transponder 125 weist gemäß einem Ausführungsbeispiel zum Senden des Funksignals 140 eine Sendeeinrichtung und/oder zum Empfangen des Empfangssignals 145 eine Empfangseinrichtung auf. Optional weist die Verbindungseinrichtung 105 gemäß einem Ausführungsbeispiel eine Vernetzungseinrichtung auf, die ausgebildet ist, um ansprechend auf einen Empfang des Empfangssignals 145 das Vernetzen durchzuführen. Gemäß diesem Ausführungsbeispiel ist die Verbindungseinrichtung 105 ausgebildet, um den Funkkanal 110 ansprechend auf einen ersten Funkkontakt zwischen dem Haushaltgerät 100 und dem weiteren Haushaltgerät 115 automatisiert aufzubauen.

Die Verbindungseinrichtung 105 ist gemäß diesem Ausführungsbeispiel ferner ausgebildet, um einen Routerkanal 150 zu dem Router 120 aufzubauen, um eine Verbindung zwischen dem Haushaltgerät 100 und einer Cloud herzustellen. Weiterhin ist die Verbindungseinrichtung 105 gemäß diesem Ausführungsbeispiel ausgebildet, um den Funkkanal 110 mit dem Routerkanal 150 zu koppeln. Dadurch kann eine Verbindung zwischen dem weiteren Haushaltgerät 115 und der Cloud über das Haushaltgerät 100 und den Router 120 hergestellt werden. Auf diese Weise kann das weitere Hauhaltgerät 115 mit dem Router 120 kommunizieren, ohne direkt mit dem Router 120 verbunden zu sein.

Optional weist das Haushaltgerät 100 gemäß diesem Ausführungsbeispiel ferner eine Bestimmeinrichtung 155 auf, die ausgebildet ist, um unter Verwendung des Funkkanals 110 eine relative Position 160 des Haushaltgeräts 100 zu dem weiteren Haushaltgerät 115 zu ermitteln. Als relative Position 160 ist eine Position des weiteren Haushaltgerät 115 beispielsweise innerhalb eines eigenen Koordinatensystems 162 des Haushaltgeräts 100 oder einem Weltkoordinatensystem zu verstehen. Ein Vernetzen zwischen Haushaltgeräten 110, 115 wird gemäß einem Ausführungsbeispiel beispielsweise zwischen besonders nah beieinander positionierten Haushaltgeräten 100, 115 priorisiert.

Gemäß einem Ausführungsbeispiel ist die Verbindungseinrichtung 105 ausgebildet, um den Funkkanal 110 nur dann automatisiert aufzubauen, wenn die relative Position 160 ein vorbestimmtes Kriterium erfüllt. Auf diese Weise kann beispielsweise verhindert werden, dass sich die Haushaltgeräte 100, 115 miteinander vernetzten, wenn sie sich zu weit voneinander entfernt oder in getrennten Haushalten befinden. Somit kann das vorbestimmte Kriterium beispielsweise einen Umkreis definieren oder richtungsabhängig unterschiedliche Maximalentfernungen definieren, innerhalb derer eine Verbindung zulässig ist.

Das hier gezeigte Haushaltgerät 100 kann zusammen mit dem weiteren Haushaltgerät 115 und dem Router 120 auch als ein Gerätesystem 165 bezeichnet werden, wobei das Haushaltgerät 100 mit dem weiteren Haushaltgerät 115 über den Funkkanal 110 ohne zwischengeschalteten Router 120 vernetzt ist. Bei dem Gerätesystem 165 sind das Haushaltgerät 100 und der Router 120 gemäß diesem Ausführungsbeispiel über den Routerkanal 150 miteinander verbunden. Gemäß diesem Ausführungsbeispiel umfasst das Gerätesystem 165 lediglich optional zumindest ein zusätzliches Haushaltgerät 170, das über einen weiteren Funkkanal 175 mit zumindest dem Haushaltgerät 100 und zusätzlich oder alternativ mit dem weiteren Haushaltgerät 115 ohne zwischengeschalteten Router 120 vernetzt ist. Bei dem zusätzlichen Haushaltgerät 170 handelt es sich um ein beliebiges Haushaltgerät. Die Haushaltgeräte 115, 170 sind gemäß einem Ausführungsbeispiel entsprechend dem Haushaltgerät mit der Funktionalität ausgestattet einen Funkkanal zu einem dritten Haushaltgerät aufzubauen. Somit sind die Haushaltgeräte 100, 115, 170 gemäß einem Ausführungsbeispiel untereinander austauschbar und können auch in einer solchen geänderten Konfiguration den hier beschriebenen Ansatz umsetzen.

Das hier vorgestellte Haushaltgerät 100, das hier beispielhaft als ein Küchengerät ausgeformt ist, und im Folgenden auch als Hausgerät oder kurz als Gerät bezeichnet wird, ermöglicht vorteilhafterweise eine UWB-Vernetzungsoptimierung. Hierzu ist das Haushaltgerät 100 ausgebildet, um sich selbstständig mit zumindest dem weiteren Haushaltgerät 115 und/oder anderen Haushaltgeräten zu vernetzen. Das Haushaltgerät 100 verfügt ferner gemäß diesem Ausführungsbeispiel über eine Information über seine eigene örtliche Position im Haushalt und über Positionen anderer Haushaltgeräte 115, 170 im Haushalt.

Anders als bei Hausgeräten, welche Vernetzungsmöglichkeiten wie WiFi, Bluetooth etc. nutzen, die auf einer Stern-Topologie basieren, sprich über einen zentralen Router 120 miteinander und mit einer Herstellercloud im Internet kommunizieren können, kommunizieren die hier vorgestellten Haushaltgeräte 100, 115, 170 direkt miteinander. Damit die Vernetzung funktioniert, muss hierzu vorteilhafterweise nicht jedes einzelne Gerät 100, 115, 170 separat im Netzwerk angemeldet werden, was mit Aufwand für den Kunden verbunden wäre. Auch ohne solche einzelnen Anmeldungen im Netzwerk verfügt bei den hier vorgestellten Haushaltgeräten 100, 115, 170 gemäß diesem Ausführungsbeispiel jedes der Haushaltgeräte 100, 115, 170 über Informationen über jedes der anderen Geräte 100, 115, 170.

Hat ein Haushaltgerät 115, 170 aufgrund seiner örtlichen Lage keine direkte Verbindung zum zentralen Verbindungspunkt in Form des Routers 120, ist es vorteilhafterweise trotzdem vernetzbar. Der Kunde muss dazu auch nicht mehr erst mehrere Minuten versuchen, das Gerät 100, 115, 170 manuell zu vernetzen.

Der hier vorgestellte Ansatz ermöglicht eine Vernetzung von Haushaltgeräten 100, 115, 170 mit Hilfe von ortsbasierten Informationen über UWB.

Die Haushaltgeräte 100, 115, 170 nutzen gemäß diesem Ausführungsbeispiel je Funkmodule, um sich mit einem zentralen Punkt, hier einem WiFi-Router 120, mit dem lokalen Netzwerk im Haushalt zu verbinden. Über diesen Router 120 werden die Geräte 100, 115, 170 anschließend mit dem Internet und den jeweiligen Hersteller-Clouds verbunden. Des Weiteren verfügen die Geräte 100, 115, 170 gemäß einem Ausführungsbeispiel zusätzlich zur WiFi-Schnittstelle über zusätzliche Funk-Schnittstellen wie z. B. Bluetooth und/oder NFC. Diese sind gemäß einem Ausführungsbeispiel für einen Vernetzungsprozess des Gerätes 100, 115, 170 in ein Kunden-WiFi initial zur Anmeldung nutzbar. Sobald die Geräte 100, 115, 170 im lokalen Kundennetzwerk mit dem Router 120 verbunden sind, kommunizieren diese lokal miteinander.

Die Geräte 100, 115, 170 sind gemäß diesem Ausführungsbeispiel ausgebildet, um auf Informationen zu verfügbaren WiFi-Netzwerken in ihrer Umgebung zuzugreifen. Diese Informationen enthalten die Netzwerk-SSID und die Signalstärke. Dank des hier vorgestellten Ansatzes ist es jedoch auch möglich, dass die Geräte 100, 115, 170 untereinander ein Mesh-Netzwerk aufbauen, ohne einen zusätzlichen WiFi-Router 120 zu benötigen.

Ein Bezug örtlicher Informationen, die ein gezieltes Routing der Geräte-Verbindungen untereinander und ein Weiterreichen von Netzwerkpaketen an entferntere, außerhalt der Router-Reichweite befindlichen Geräten 115, 170 erlaubt, ist nun dank der Verbindungseinrichtung 105 des Haushaltgeräts 100 möglich. Geräte 115, 170, die sich außerhalb der Reichweite des WiFi-Routers 120 befinden, können vernetzt werden. Neue Geräte 115, 170 müssen also vorteilhafterweise nicht händisch ins Netzwerk integriert werden, beispielsweise durch einen Anmeldeprozess, WiFi-Credentials, also über WiFi-Zugangsdaten. Ferner sind örtliche Informationen zu den Haushaltgeräten 100, 115, 170 abrufbar. Eine Kommunikation der Geräte 100, 115, 170 erfolgt über den UWB-basierten Funkkanal 110 und beschränkt sich nicht nur auf einen Funkkanal beziehungsweise eine Frequenz und bestimmte Protokolle. Bei Ausfall der WiFi-Netzverbindung, z. B. durch Router-Probleme, können die Geräte 100, 115, 170 auch weiterhin miteinander kommunizieren.

Die Geräte 100, 115, 170 weisen je die Verbindungseinrichtung 105, 130 in Form einer zusätzlichen Kommunikationsschnittstelle über UWB auf und sind ferner ausgebildet, um auch Vorteile aus einer Information über deren örtliche Positionen relativ zueinander zu ziehen. Der Pairing-Prozess ist somit vereinfacht oder entfällt sogar komplett.

Entfernte Geräte 115, 170, die außerhalb der Reichweite des Kunden-WiFi-Routers 120 angeordnet sind, werden gemäß diesem Ausführungsbeispiel erkannt und über einen automatischen Aufbau eines Geräte-Mesh-Netzwerks für den Kunden nutzbar gemacht und mit der Herstellercloud verbunden. Zusätzlich zu vorhandenen Funkschnittstellen wie WiFi und/oder Bluetooth, sind die Geräte 100, 115, 170 hierzu um die UWB-Transponder 125, 135 erweitert. Diese ermöglichen in erster Linie eine exakte örtliche relative Lokalisation zueinander. Des Weiteren ist UWB auch zur Datenübertragung nutzbar. In Kombination mit den vorhandenen Informationen über WiFi- und/oder Bluetooth-Signale ist so gezielt ein Mesh-Netzwerk zwischen bereits vernetzten und unvernetzten Geräten 100, 115, 170 realisierbar, auch über mehrere Geräte 100, 115, 170 hinweg. Eine Waschmaschine im Keller ist so beispielsweise auch ohne direkten Funkkontakt zum Kunden-Router 120 vernetzbar, es wird dazu lediglich ein Gerät 100, 115, 170 in der Nähe benötigt, über welches der Kontakt herstellbar ist. Da gemäß diesem Ausführungsbeispiel Informationen über lokale Gegebenheiten und Signalstärken vorliegen, sind die Geräte 100, 115, 170 ausgebildet, um untereinander auch sofort die optimalen Routen für das so entstehende Mesh-Netzwerk zu bestimmen. Es ist sogar möglich, Geräte 100, 115, 170, die in verschiedenen Haushalten stehen, als Repeater einzusetzen, sogar, wenn diese auf verschiedenen WiFi-Funkkanälen arbeiten. In diesem Fall wird das Mesh dann komplett über UWB realisiert.

Zusammengefasst ist es den hier vorgestellten Haushaltgeräten 100, 115, 170 möglich, sich untereinander direkt zu sehen oder zu erkennen und miteinander zu kommunizieren, dadurch wird der Pairing-Prozess automatisiert, sobald der Kunde ein initiales Gerät, hier das Haushaltgerät 100, vernetzt hat, da dieses anschließend zur automatischen Einbindung weiterer Geräte 115, 170 genutzt wird. Weit entfernte Geräte 115, 170, deren WiFi-Reichweite zu gering ist, um sich mit dem Heim-Router 120 des Kunden zu verbinden, werden gemäß diesem Ausführungsbeispiel über lokal in Reichweite befindliche Geräte 100 und/oder über UWB vernetzt. Für das so entstehende Mesh-Netzwerk helfen die zusätzlichen örtlichen Informationen der Standorte der einzelnen Geräte 100, 115, 170, die idealen Routen zu bestimmen. Die Geräte 100, 115, 170 untereinander kommunizieren also miteinander, ein Datenaustausch, der englisch auch als "Datentraffic" bezeichnet werden kann, läuft nicht mehr über die Cloud zwischen den Geräten 100, 115, 170. Die Aufnahme neuer Geräte 115, 170 erfolgt gemäß diesem Ausführungsbeispiel automatisiert ins Netz, was zu einem vereinfachten Vernetzungsprozess führt. Es wird UWB genutzt, um ferne Geräte 115, 170 ins Netz zu bekommen: Die Waschmaschine im Keller verbindet sich beispielsweise über UWB mit dem Kühlschrank und die Vernetzung läuft dann über den Kühlschrank, da dieser beispielsweise die beste Verbindung zum Router 120 hat. Die Geräte 100 wissen wo sie örtlich stehen und sind in Verbindung miteinander. Neue Geräte 115, 170 werden gemäß diesem Ausführungsbeispiel direkt aufgenommen, sofern sie im gleichen Haushalt stehen. So ist eine optimale Vernetzung sichergestellt. Dazu nehmen die Geräte 100, 115, 170 gemäß diesem Ausführungsbeispiel den direkten Weg, also Device-to-Devise, kurz "D2D".

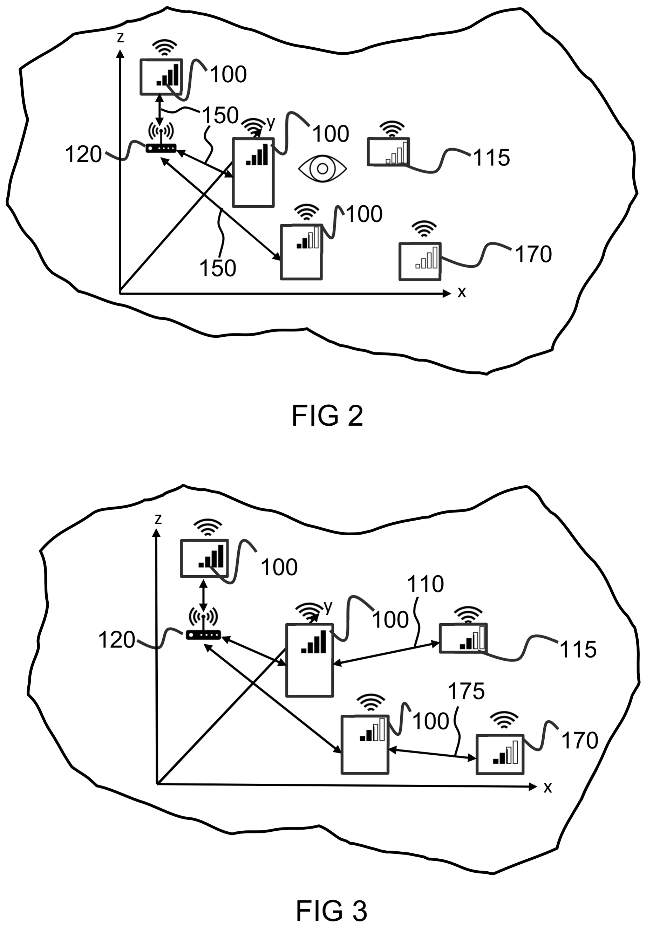

Figur 2 zeigt eine schematische Darstellung von Haushaltgeräten 100, 115, 170 gemäß einem Ausführungsbeispiel innerhalb eines Haushalts. Dabei kann es sich um die in Figur 1 beschriebenen Haushaltgeräte 100, 115, 170 des Gerätesystems handeln, mit dem Unterschied, dass das Gerätesystem hier beispielhaft drei Haushaltgeräte 100 umfasst, welche je eine Routerverbindung 150 zu dem Router 120 aufweisen. Das weitere Haushaltgerät 115 und das zusätzliche Haushaltgerät 170 sind vor einem ersten Funkkontakt mit einem der Haushaltgeräte 100 dargestellt und haben keine Routerverbindung.

Figur 3 zeigt eine schematische Darstellung von Haushaltgeräten 100, 115, 170 gemäß einem Ausführungsbeispiel innerhalb eines Haushalts. Dabei kann es sich um die in Figur 2 beschriebenen Haushaltgeräte 100, 115, 170 handeln, mit dem Unterschied, dass das weitere Haushaltgerät 115 und das zusätzliche Haushaltgerät 170 nun je einen Funkkanal 110, 175 zu einem der Haushaltgeräte 100 mit Routerverbindung aufgebaut haben.

Gemäß diesem Ausführungsbeispiel wurde das weitere Haushaltgerät 115 mit demjenigen der Haushaltgeräte 100 vernetzt, welches am nächsten zu dem weiteren Haushaltgerät 115 positioniert ist und/oder eine beste Routerverbindung aufweist. Gemäß diesem Ausführungsbeispiel wurde das zusätzliche Haushaltgerät 170 mit demjenigen der Haushaltgeräte 100 vernetzt, welches am nächsten zu dem zusätzlichen Haushaltgerät 170 positioniert ist und/oder eine beste Routerverbindung aufweist. Optional wurden gemäß diesem Ausführungsbeispiel der Funkkanal 110 und der weitere Funkkanal 175 je mit dem Routerkanal des vernetzten Haushaltgeräts 100 verbunden, wodurch auch das weitere Haushaltgerät 115 und das zusätzliche Haushaltgerät 170 je eine Verbindung zu der Cloud haben.

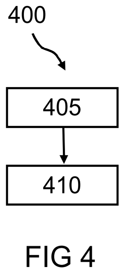

Figur 4 zeigt ein Ablaufdiagramm eines Ausführungsbeispiels eines Verfahrens 400 zum Verbinden eines Haushaltgeräts mit einem weiteren Haushaltgerät. Dabei kann es sich um das in Figur 1, 2 oder 3 beschriebene Haushaltgerät und weitere Haushaltgerät handeln.

Das Verfahren 400 weist einen Schritt 405 des Aufbauens und einen Schritt 410 des Vernetzens auf. Im Schritt 405 des Aufbauens wird ein UWB-basierter Funkkanal mit dem noch nicht mit dem Haushaltgerät vernetzten weiteren Haushaltgerät aufgebaut. Im Schritt 410 des Vernetzens wird das Haushaltgerät mit dem weiteren Haushaltgerät unter Verwendung des Funkkanals ohne zwischengeschalteten Router vernetzt, um das Haushaltgeräts mit dem weiteren Haushaltgerät zu verbinden.

## Patentansprüche

1. Haushaltgerät (100) mit einer Verbindungseinrichtung (105), die ausgebildet ist, um einen UWB-basierten Funkkanal (110) mit einem noch nicht mit dem Haushaltgerät (100) vernetzten weiteren Haushaltgerät (115) aufzubauen und das Haushaltgerät (100) unter Verwendung des Funkkanals (110) mit dem weiteren Haushaltgerät (115) ohne zwischengeschalteten Router (120) zu vernetzen.

2. Haushaltgerät (100) gemäß Anspruch 1, bei dem die Verbindungseinrichtung (105) einen UWB-Transponder (125) umfasst.

3. Haushaltgerät (100) gemäß einem der vorangegangenen Ansprüche, bei dem die Verbindungseinrichtung (105) ausgebildet ist, um ein UWB-basiertes Funksignal (140) an das weitere Haushaltgerät (115) zu senden, um den Funkkanal (110) aufzubauen.

4. Haushaltgerät (100) gemäß einem der vorangegangenen Ansprüche, bei dem die Verbindungseinrichtung (105) ausgebildet ist, um ein UWB-basiertes Empfangssignal (145) von dem weiteren Haushaltgerät (115) zu empfangen, um den Funkkanal (110) aufzubauen.

5. Haushaltgerät (100) gemäß einem der vorangegangenen Ansprüche, bei dem die Verbindungseinrichtung (105) ausgebildet ist, um einen Routerkanal (150) zu dem Router (120) aufzubauen, um eine Verbindung zwischen dem Haushaltgerät (100) und einer Cloud herzustellen.

6. Haushaltgerät (100) gemäß einem der vorangegangenen Ansprüche, bei dem die Verbindungseinrichtung (105) ausgebildet ist, um den Funkkanal (110) mit dem Routerkanal (150) zu koppeln, um eine Verbindung zwischen dem weiteren Haushaltgerät (115) und der Cloud über das Haushaltgerät (100) und den Router (120) herzustellen.

7. Haushaltgerät (100) gemäß einem der vorangegangenen Ansprüche, bei dem die Verbindungseinrichtung (105) ausgebildet ist, um den Funkkanal (110) ansprechend auf einen ersten Funkkontakt zwischen dem Haushaltgerät (100) und dem weiteren Haushaltgerät (115) automatisiert aufzubauen.

8. Haushaltgerät (100) gemäß einem der vorangegangenen Ansprüche, mit einer Bestimmeinrichtung (155), die ausgebildet ist, um unter Verwendung des Funkkanals (110) eine relative Position (160) des Haushaltgeräts (100) zu dem weiteren Haushaltgerät (115) zu bestimmen.

9. Haushaltgerät (100) gemäß einem der vorangegangenen Ansprüche, bei dem die Verbindungseinrichtung (105) ausgebildet ist, um einen UWB-basierten weiteren Funkkanal (175) mit einem noch nicht mit dem Haushaltgerät (100) vernetzten zusätzlichen Haushaltgerät (170) aufzubauen und das Haushaltgerät (100) unter Verwendung des weiteren Funkkanals (175) mit dem zusätzlichen Haushaltgerät (170) ohne zwischengeschalteten Router (120) zu vernetzen.

10. Verfahren (400) zum Verbinden eines Haushaltgeräts (100) gemäß einem der vorangegangenen Ansprüche mit einem weiteren Haushaltgerät (115), wobei das Verfahren (400) die folgenden Schritte aufweist:
Aufbauen (405) eines UWB-basierten Funkkanal (110) mit dem noch nicht mit dem Haushaltgerät (100) vernetzten weiteren Haushaltgerät (115); und
Vernetzen (410) des Haushaltgeräts (100) mit dem weiteren Haushaltgerät (115) unter Verwendung des Funkkanals (110) ohne zwischengeschalteten Router (120), um das Haushaltgeräts (100) mit dem weiteren Haushaltgerät (115) zu verbinden.

11. Gerätesystem (165) mit einem Haushaltgerät (100) gemäß einem der Ansprüche 1 bis 9, dem weiteren Haushaltgerät (115) und dem Router (120), wobei das Haushaltgerät (100) mit dem weiteren Haushaltgerät (115) über den Funkkanal (110) ohne zwischengeschalteten Router (120) vernetzt ist.

12. Gerätesystem (165) gemäß Anspruch 11, bei dem das Haushaltgerät (100) und der Router (120) über einen Routerkanal (150) miteinander verbunden sind.

13. Gerätesystem (165) gemäß einem der Ansprüche 9 bis 12, mit einem zusätzlichen Haushaltgerät (170), das über einen weiteren Funkkanal (175) mit zumindest dem Haushaltgerät (100) und/oder weiteren Haushaltgerät (115) ohne zwischengeschalteten Router (120) vernetzt ist.
